# EUROPEAN PATENT SPECIFICATION

(11) **EP 4 504 476 B1**
(45) Date of publication and mention of the grant of the patent: **03.06.2026**
(21) Application number: 23720970.5
(22) Date of filing: 04.04.2023
(51) Int. Cl.: B29C 43/00, B65D 55/02, B65D 41/34, B29C 57/10, B29C 43/02, B29C 57/00, B65D 41/48, B29C 43/42, B29K 1/00, B29K 105/12, B29K 105/16

(54) **CAPS FOR A CONTAINER AND METHOD FOR MAKING A CAP FOR A CONTAINER**
DECKEL FÜR EINEN BEHÄLTER UND VERFAHREN ZUR HERSTELLUNG EINES DECKELS FÜR EINEN BEHÄLTER
BOUCHON DE FERMETURE POUR RÉCIPIENTS ET MÉTHODE DE FABRICATION D'UN BOUCHON DE FERMETURE POUR RÉCIPIENTS

(30) Priority: 04.04.2022 IT 202200006653
(43) Date of publication of application: 12.02.2025
(73) Proprietor: SACMI COOPERATIVA MECCANICI IMOLA SOCIETA' COOPERATIVA, 40026 Imola (IT)
(72) Inventor: PUCCI, Fabrizio, 40023 CASTEL GUELFO DI BOLOGNA (BOLOGNA) (IT); PARRINELLO, Fiorenzo, 40059 MEDICINA (BOLOGNA) (IT); MAZZOTTI, Giovanni, 40139 BOLOGNA (IT); BALDUCCI, Eleonora, 61037 MONDOLFO (PESARO E URBINO) (IT)
(74) Representative: Colò, Chiara
(86) International application number: PCT/IB2023/053403
(87) International publication number: WO 2023/194897

(56) References cited:
- EP-B1- 0 913 334
- EP-B1- 3 080 003
- WO-A1-2020/165780
- WO-A1-2021/018772
- JP-A- S59 204 512
- JP-B2- H0 815 912
- US-A1- 2014 190 968
- US-A1- 2022 041 340

## Description

The invention relates to a cap intended to be used for closing a container, for example a bottle, a jar, a cup-shaped container and others. US2022/041340 A1 discloses a method for making a cap for a container, comprising the steps of inserting in a mould a material in a solid state or in the form of a solid dispersed in a liquid and pressing the material in the mould, to obtain a cup-shaped component, the cup-shaped component having a skirt which extends around an axis and an end wall which closes the skirt at one end thereof and making on the skirt at least one breakable line which at least partly surrounds the axis to define a closure body and an annular band on the cup-shaped component.

The cap according to the invention is made with a mainly natural fibre-based material, for example a material whose main ingredient is cellulose.

The invention also relates to a method for making a cap made with a mainly natural fibre-based material, for example a material whose main ingredient is cellulose.

For reasons linked to environmental protection, the use of natural and renewable materials is desirable, for example cellulose-based materials, for making caps for containers. In fact, such materials are much less polluting and easier to dispose of than synthetic polymers which are currently widely used in the packaging sector.

Container caps made of microfibrillated cellulose (MFC) are known, for example from European patent EP 3080003. The caps disclosed in EP 3080003 comprise a closure body with an inner thread, which may be applied on a container neck and removed from the container neck a desired number of times.

It is desirable for the caps for containers to be provided with tamper-evident means to allow a consumer to be able to notice whether or not the cap has been tampered with.

However, it is not simple to make the tamper-evident means in a cap for a container made with a material containing natural fibres. In fact, making a cap comprising tamper-evident means involves a complication both in the mould used for making the cap, and in the process which can be used to obtain the cap. Moreover, if the material comprising natural fibres is not processed correctly, the cap having the tamper-evident means may have defects or have a greater risk of breaking.

Caps for containers are known which comprise a tamper-evident ring, suitable for remaining anchored to a neck of a container, and a closure body, which can be repeatedly applied on the neck of the container or removed from the latter.

The tamper-evident ring is connected to the closure body by means of at least one connecting part which allows the closure body to rotate relative to the tamper-evident ring, in such a way that the closure body remains attached to the tamper-evident ring even when the closure body is in an open position, that is to say, even after the closure body has been removed from the neck of the container.

Caps of this type, if made of cellulose, may have disadvantages chiefly linked to the risks of breaking the connecting part which joins the closure body to the tamper-evident ring. Since the connecting part is repeatedly bent when the closure body is brought into a closed position or alternatively into an open position, small cracks may form in the connecting part which may propagate until they cause a break.

An object of the invention is to improve caps for containers which are made with a mainly natural fibre-based material, in particular a material whose main ingredient is cellulose.

Another object is to provide a cap for a container, mainly made with a natural and renewable material, which allows a consumer to verify whether or not the container closed by the cap has already been opened.

Still another object is to provide a cap for a container, mainly made with a natural and renewable material, which can be made in a relatively easy way. A further object is to make a cap for a container having a closure body and a tamper-evident ring, wherein the closure body is connected to the tamper-evident ring even when the closure body is in an open position, which is made mainly with a natural and renewable material.

In a first aspect of the invention, there is provided a method for making a cap for a container, comprising the steps of:
- inserting in a mould a material in a solid state or in the form of a solid dispersed in a liquid, said material containing at least 70% cellulose by weight;
- pressing the material in the mould to obtain a cup-shaped component, the cup-shaped component having a skirt which extends around an axis and an end wall which closes the skirt at one end thereof;
- making on the skirt at least one breakable line which at least partly surrounds the axis to define on the cup-shaped component a closure body and an annular band;
- folding a portion of the annular band inwards towards the inside of the cup-shaped component, to obtain at least one retaining element which projects inwards towards the inside of the annular band so as to keep the annular band associated with a neck of the container.

Owing to the first aspect of the invention, it is possible to obtain a cap for a container having tamper-evident means, that is to say, in which the consumer is able to establish whether or not the container has already been opened. This is made possible by the breakable line, which allows partial or total separation of the closure body from a tamper-evident ring formed from the annular band. The folded portion of the annular band defines one or more retaining elements which keep the tamper-evident ring joined to the neck of the container even when the closure body is removed from the neck to access the inside of the container.

The retaining element, defined by the folded portion of the annular band, can be made with a folding operation, without requiring special devices in the structure of the mould. In particular, to make the retaining element it is not necessary to provide protuberances in the cup-shaped component, which would lead to complications in the mould and to difficulty in obtaining a constant degree of compacting of the material with which the cup-shaped component is made.

The cap obtained with the method according to the first aspect of the invention is made with a mainly natural fibre-based material and comprises a significant quantity of cellulose, equal to at least 70% by weight.

Therefore, cellulose is the main ingredient of the cap, and should be considered as a matrix of the cap, inside which additives or fillers may be dispersed.

The cap made with the method according to the first aspect of the invention is therefore made with an eco-friendly material having a low environmental impact, less polluting than the synthetic polymeric materials with which caps for containers are normally made.

In an embodiment, the material with which the cap is formed may comprise at least 80% cellulose by weight.

In an embodiment, the method further comprises the step of making a plurality of cut lines which extend transversally to a free edge of the skirt, in an end region of the skirt opposite to the end wall.

The portion of the annular band which is folded inwards towards the inside of the cup-shaped component to obtain at least one retaining element may be a tab defined between two consecutive cut lines.

In this way it is possible to obtain, by means of simple cutting operations and subsequent bending, a plurality of folded tabs which act as retaining elements, effective for keeping the annular band joined to the neck of the container, after the closure body has been removed.

In a second aspect of the invention, there is provided a cap for a container, the cap comprising a cup-shaped component made with a material comprising a cellulose matrix, wherein at least 70% by weight of the material with which the cap is made is cellulose, the cup-shaped component having a skirt which extends around an axis and an end wall which closes the skirt at one end thereof, wherein at least one breakable line is provided on the skirt, the at least one breakable line at least partly surrounding the axis to define on the cup-shaped component a closure body and a tamper-evident ring, the tamper-evident ring comprising an annular band having a portion folded inwards towards the inside of the cup-shaped body, so as so as to define a retaining element which projects inwards towards the inside of the tamper-evident ring to keep the tamper-evident ring associated with a neck of the container.

The cap provided by the second aspect of the invention is an eco-friendly cap which allows a consumer to notice immediately if the relative container has already been opened, owing to the - complete or partial - separation of the closure body from the annular band, along the breakable line. When the closure body is separated from the annular band, the latter remains anchored to the neck of the container, since the retaining element engages with an annular bead made on the neck of the container.

The retaining element, being defined by a folded portion of the annular band, can be made in a simple way, for example by means of a folding operation, without requiring complicated moulds.

In an embodiment, the natural fibre-based material with which the cap is made contains a quantity of cellulose equal to at least 80% by weight.

That further reduces the environmental impact of the cap.

In an embodiment, the annular band comprises a plurality of retaining elements defined by respective tabs folded inwards towards the inside of the cup-shaped component, each tab extending from an end zone of the tamper-evident ring opposite to the breakable line.

Owing to the plurality of retaining elements, it is possible to effectively prevent the tamper-evident ring from being pulled off the neck of the container. The folded tabs can be obtained by means of simple cutting and folding operations, without the need for complicated moulds.

In a third aspect of the invention, there is provided a cap for a container, comprising a closure body having an inner fixing structure for being removably fixed to a neck of the container, a tamper-evident ring intended to remain anchored to the neck of the container, at least one connecting band for keeping the closure body fixed to the tamper-evident ring even after the closure body has been removed from the neck, wherein the cap is made with a natural fibre-based material containing a quantity of cellulose equal to at least 70% by weight, and wherein the natural fibre-based material has an elastic modulus of between 200 and 2000 MPa, a tensile strength of between 15 and 70 MPa, and a deformation at the maximum tensile stress of between 3% and 30%.

The cap according to the third aspect of the invention is made with a material which is not very polluting and which has a limited environmental impact.

The environmental impact of the cap according to the third aspect of the invention is kept low also owing to the connecting band, which keeps the closure body connected to the tamper-evident ring even after the container has been opened. This prevents the closure body from being thrown on the ground, deliberately or in an unwanted way. This makes it more likely that the closure body will be disposed of correctly together with the remaining components of the container.

The values of elastic modulus, tensile strength, and deformation at the maximum tensile stress make it possible to deform the connecting band multiple times, in order to bring the closure body into an open position, without damaging the connecting band.

Good mechanical strength is also guaranteed, which makes it difficult to accidentally break the connecting band and therefore to detach the closure body from the tamper-evident ring, which would be unwanted.

In an embodiment, the natural fibre-based material with which the cap is made contains a quantity of cellulose equal to at least 80% by weight. That further reduces the environmental impact of the cap.

The invention can be better understood and implemented with reference to the accompanying drawings, which illustrate several example, non-limiting embodiments of it, in which:
Figure 1 is a perspective view showing a cup-shaped component, in an initial step of a method for making a cap;
Figure 2 is a view like that of Figure 1, showing the cup-shaped component on which a breakable line has been made;
Figure 3 is a view like that of Figure 1, showing the cup-shaped component on which a plurality of cut lines arranged transversally to the breakable line have been made;
Figure 4 is a view like that of Figure 1, showing a final step of the method for making a cap;
Figure 5 is a view like that of Figure 4, showing a cap according to a first alternative embodiment;
Figure 6 is a view like that of Figure 4, showing a cap according to a second alternative embodiment;
Figure 7 is a perspective view of a cap provided with a hinge structure which joins a closure body to a tamper-evident ring;
Figure 8 is a perspective view of a cap in which the tamper-evident ring and the closure body are joined by at least one connecting band;
Figure 9 shows the cap of Figure 8, seen from a different angle.

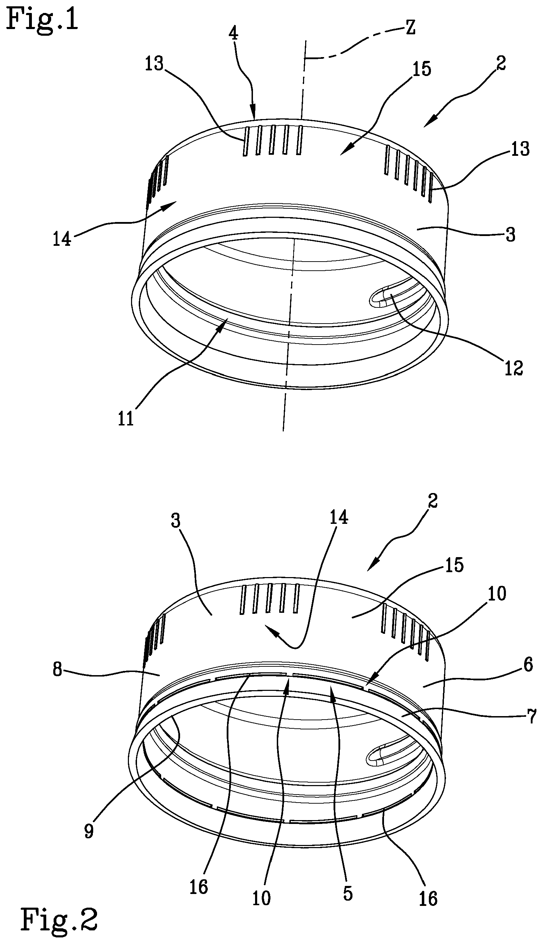

Figures 1 to 4 show the salient steps of a method for obtaining a cap 1 made with a mainly natural fibre-based material, in particular a natural fibre-based material having a significant percentage of cellulose by weight.

Cellulose is the main ingredient of the cap and forms at least 70% of the material with which the cap is made.

The material with which the cap 1 is made may also comprise other ingredients in addition to cellulose, for example a limited quantity of synthetic polymers, in particular biodegradable. The material with which the cap 1 is made may comprise, in addition to cellulose, a limited quantity of additives, for example substances suitable for increasing the density obtained by compacting the starting material, or substances suitable for improving particular types of performance of the cap 1, such as barrier properties against liquids or gases, or other performance.

The material with which the cap 1 is made may therefore be considered to be a material having a cellulose matrix, which contains small quantities of other substances, in order to enhance the performance of the cap 1 or to make it easier to form the cap, from a technological viewpoint.

The quantity of cellulose is kept as high as possible, in order to eliminate or minimise synthetic ingredients and to obtain a cap which is easy to recycle. In an embodiment, the quantity of cellulose present in the cap may be greater than or equal to 80% by weight.

The cellulose fibres contained in the cap 1 may have a length in the range 0.2 - 3.0 mm. Those fibres may have a width, that is to say, a transversal dimension relative to the length, for example a diameter, in the range 0.01 - 0.05 mm.

These values of the length and transversal dimensions may be present at least in 50% of the cellulose fibres used to make the cap 1. In one embodiment, the values of the length and transversal dimensions indicated above are present at least in 70% of the cellulose fibres used to make the cap 1.

The cap 1 is obtained starting from a cup-shaped component 2, shown in Figure 1. The cup-shaped component 2 comprises a skirt 3, which extends around an axis Z. At least part of the skirt 3 may have a cylindrical structure. The cup-shaped component 2 also comprises an end wall 4 which closes the skirt 3 at one end thereof. The end wall 4 is arranged transversally, for example perpendicularly, to the axis Z. The end wall 4 may be flat. In the example illustrated, the end wall 4 has a circular shape in plan view.

The cup-shaped component 2 may be obtained in a mould by pressing or compression moulding the material containing cellulose described above. The material with which the cap 1 is formed may be inserted in the mould in a dry solid state, for example in the form of powder, or granules, or solid film, or fluff, or airlaid structure.

Alternatively, the material with which the cap is formed may be inserted in the mould in a pasty state, in which case that material may be obtained by adding water or another liquid to a dry starting material. In this way what is obtained is a solid dispersed in a liquid, that is to say, a pasty substance in which the particles of cellulose and other solid ingredients are dispersed in a liquid.

The material with which the cap is formed is inserted in the mould in a non-melted state.

The material with which the cap is formed is not extrudable. It cannot be extruded because it would degrade, that is to say, it would burn, before melting. It is possible to heat the material with which the cap is formed, in order to make compacting it easier, but only up to temperatures which are lower than the theoretical melting point.

The material containing cellulose is inserted between two mould parts which are moved one towards the other to compress that material and to obtain the cup-shaped component 2.

During the compression moulding process aiming to obtain the cup-shaped component 2, pressures greater than 200 bar may be applied to the material containing cellulose inside the mould. The material containing cellulose may be heated until it reaches a temperature within the range 150-200°C. Heating of the material containing cellulose may occur in the mould and/or upstream of the latter, in such a way that the material containing cellulose arrives in the mould already at the desired temperature.

After compression moulding, in the finished cap 1, the material containing cellulose with which the cap 1 is made may have a density of between 0.75 and 1.3 g/cm³.

The grammage of the starting material, that is to say, the grammage of the starting material before being subjected to compression moulding, may be between 500 and **1100** g/m².

As regards mechanical properties, in the finished cap 1, the material containing cellulose with which the cap 1 is made may have an elastic modulus of between 200 and 2000 MPa.

The tensile strength (that is to say, maximum tensile stress to which the material can be subjected before breaking) may be between 15 and 70 MPa.

The deformation at the maximum allowable tensile stress may be between 3 and 30%.

The tensile strength and elastic modulus values are measured by means of a tensile stress test carried out on the material which forms the moulded cap 1, in particular on a rectangular sample with the dimensions 18 mm x 5.8 mm, cut from an end wall or upper panel of the cap 1, which usually has a flat structure. The end wall of the cap 1, and consequently the sample, may have a thickness of between 0.5 and 0.95 mm.

The instrument used for carrying out the measurements may be a tool available for sale for tensile stress tests on various materials, for example the instrument known as Instron 3366.<

The test speed is 50 mm/minute and the preload value is 10 N. A 500 N load cell is used.

In this way a graph is obtained in which the tension, measured in MPa, is shown as a function of the deformation, which is a dimensionless quantity. The graph is used to obtain the tensile strength or maximum stress, understood to be the maximum point reached by the curve, and the elastic modulus, understood to be the gradient of the first part of the curve, which has a linear trend.

A breakable line 5 is made on the skirt 3, the breakable line 5 at least partly surrounding the axis Z. The breakable line 5 extends transversally to the axis Z. In the example illustrated, the breakable line 5 lies in a plane arranged perpendicularly to the axis Z.

The breakable line 5 defines on the cup-shaped component 2 a closure body 6 and an annular band 7. The closure body 6 comprises the end wall 4 and a portion of the skirt 3 interposed between the breakable line 5 and the end wall 4. That portion defines a side wall 8 of the closure body 6. The annular band 7 extends between the breakable line 5 and a free edge 9 of the skirt 3. The free edge 9 is located on the side of the skirt 3 opposite to the end wall 4.

The closure body 6 is intended to be applied in a removable way to a neck of a container. For that purpose, the closure body 6 may have an inner fixing structure 11, which may comprise one or more helical threads 12 which project inwards towards the inside of the closure body 6 from its inner surface.

The helical thread 12 or helical threads 12 made inside the closure body 6 are intended to engage with corresponding outer helical threads present on the neck of the container which the cap 1 allows closing of. In this way, the closure body 6 may be repeatedly screwed onto the neck in order to bring it into a closed position or alternatively unscrewed in order to open the container.

In an alternative embodiment, in place of the helical thread 12 or the helical threads 12, the inner fixing structure 11 may comprise other elements to allow the closure body 6 to be removably connected to the neck of the container, for example cam elements.

In an alternative embodiment, the cap could be of the snap-on type and be without helical threads.

On an outer surface of the cup-shaped component 2, a plurality of knurling lines 13 may be provided, intended to allow more stable gripping of the closure body 6 by a consumer or by a capping machine. In the example illustrated, the knurling lines 13 have a length, measured parallel to the axis Z, which is less than the height of the lateral wall 8. In an alternative embodiment not illustrated, the knurling lines 13 could extend over the entire height of the lateral wall 8, that is to say, over the entire dimension of the lateral wall 8 parallel to the axis Z.

In the example illustrated, the knurling lines 13 are grouped to form groups 14. Two adjacent groups 14 of knurling lines 13 are separated by portions of smooth surface 15, in which the knurling lines 13 are absent. This condition is not necessary, and the knurling lines 13 could, alternatively, be distributed without interruptions along a 360° angle around the axis Z. The breakable line 5 may be obtained after the cup-shaped component 2 has already been formed in the relative mould. In this case, the breakable line 5 may be obtained in particular by means of a cutting operation, for example using a cutting blade, or by means of laser cutting.

If the breakable line 5 is made by means of a cutting operation, this operation may occur after the cup-shaped component 2 has already been extracted from the mould, or while the cup-shaped component 2 is still associated with a part of the mould in which it was formed.

Alternatively, the breakable line 5 may be obtained during the moulding process by means of which the cup-shaped component 2 is made, by using a suitably designed mould.

In the example illustrated, as shown in Figure 2, the breakable line 5 comprises a plurality of breakable bridges 10 which join the closure body 6 and the annular band 7. The breakable bridges 10 are distributed around the axis Z, for example with constant angular distances between two consecutive breakable bridges 10.

A separating stretch is interposed between two consecutive breakable bridges 10. The separating stretch which may comprise a cut 16, for example a through cut passing through the thickness of the skirt 3.

In an alternative embodiment not illustrated, the separating stretches interposed between two breakable bridges 10 may comprise lines of weakness having the shape of non-through cuts.

It is also possible to have a breakable line 5 structured like a line of weakness along which the material which forms the cup-shaped component 2 has a thickness which is less than that of the surrounding zones.

In one embodiment, the breakable line 5 may comprise a line of weakness having a reduced thickness, for example constant, which extends 360° around the axis Z. In this case, there are no breakable bridges.

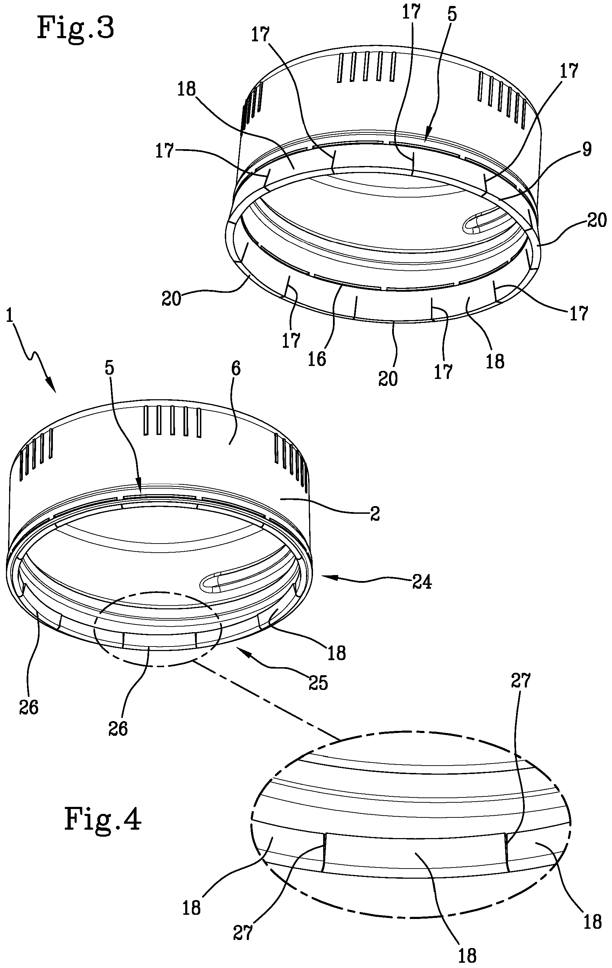

The annular band 7 may have a structure which is cylindrical, or frustoconical, or may comprise cylindrical portions and frustoconical portions. The annular band 7 may have a substantially constant thickness. A subsequent step comprises the step of making a plurality of cut lines 17 in an end region of the skirt 3 opposite to the end wall 4, more specifically on the annular band 7, as shown in Figure 3. The cut lines 17 extend transversally, for example perpendicularly, to the free edge 9 of the skirt 3. The cut lines 17 extend transversally, for example perpendicularly, to the breakable line 5.

In the example illustrated, the cut lines 17 are straight lines each of which extends parallel to the axis Z. Therefore, when the cap 1 is positioned in an operating position corresponding to the position in which the cap 1 is applied on the container, that is to say, in which the axis Z is positioned vertically and a concavity of the cup-shaped component 2 is directed downwards, the cut lines 17 extend substantially vertically.

The cut lines 17 may be parallel to each other, as in the example illustrated. However, this condition is not necessary and, in an alternative embodiment, the cut lines 17 could be non-parallel.

Moreover, the cut lines 17 could be positioned slanting relative to the breakable line 5, that is to say, not parallel to that line, nor perpendicular to it.

The cut lines 17 may have the same length, as in the example illustrated. It is also possible to have cut lines 17 having different lengths from each other. The cut lines 17 are obtained by means of a cutting operation, for example using a cutting blade or by means of laser cutting. The cutting operation may occur while the cup-shaped component 2 is still in the mould in which it was formed, for example while the cup-shaped component 2 is supported by a mould part. Alternatively, the cutting operation by means of which the cut lines 17 are made may occur after the cup-shaped component 2 has been extracted from the mould.

The cut lines 17 may be through lines which, along their entire length, extend through the entire thickness of the material which forms the cap 1. In an alternative embodiment, the cut lines 17 could be lines of weakness, which locally weaken the material forming the cap 1 in such a way as to cause a facilitated break during the subsequent operations to which the cap 1 is intended to be subjected. In the latter case, the cut lines 17 could be lines at which the thickness of the material which forms the cap 1 is reduced, but greater than zero.

The cut lines 17 have a length which is less than the distance between the free edge 9 and the breakable line 5. Each cut line 17 has a first end nearer the breakable line 5 and a second end further from the breakable line 5. The first end is at a distance from the breakable line 5.

In the example illustrated, the second end is arranged on the free edge 9, that is to say, each cut line 17 reaches the free edge 9 of the cup-shaped component 2.

In an embodiment, it is possible to have one or more joining points along each cut line 17, which are intended to be broken during the subsequent operations to which the cap 1 will be subjected. For example, there could be a joining point at the free edge 9.

A portion of the annular band 7 shaped like a tab 18 is arranged between two consecutive cut lines 17. Each tab 18 has a long side 20 delimited by the free edge 9 and two short sides defined by two consecutive cut lines 17. The angular amplitude of each tab 18, that is to say, its angular extent around the axis Z, may be greater than or equal to 10°.

The angular amplitude of the tabs 18 may be constant for all of the tabs 18 distributed around the axis Z. Alternatively, the angular amplitude of the tabs 18 may not be constant around the axis Z, that is to say, there may be some tabs 18 whose angular extent is greater than others.

In a subsequent step, as shown in Figure 4, at least one portion of the annular band 7 is folded inwards towards the inside of the cup-shaped component 2. In the example illustrated, the portion of the annular band 7 which is folded inwards towards the inside of the cup-shaped component 2 is a tab 18 defined between two consecutive cut lines 17.

More specifically, the plurality of tabs 18 defined by the cut lines 17 are folded inwards towards the inside of the cup-shaped component 2. That happens by rotating each tab 18 around an end zone thereof opposite to the long side 20. More specifically, each tab 18 is rotated by 180°, or almost, in such a way that it is brought into a position facing an inner surface of the cup-shaped component 2, optionally in contact with that surface.

Each cut line 17 defines a short side 27 of one tab 18 and of the next tab 18.

The tabs 18 are folded with a folding operation which occurs after the cup-shaped component 2 has been extracted from the mould and after the cut lines 17 have been made.

In this way, from the annular band 7 a tamper-evident ring 24 is obtained which, during use of the cap 1, is intended to remain joined to a neck of the container closed by the cap 1.

Therefore, after the folding operation, a cap 1 is obtained of the type shown in Figure 4, comprising the closure body 6 joined to the tamper-evident ring 24 along the breakable line 5. The tamper-evident ring 24 has a plurality of retaining elements 26 to keep the tamper-evident ring 24 joined to the neck of the container, each retaining element 26 comprising a folded tab 18. The tabs 18 are folded inwards towards the inside of the cap 1 and extend from an end zone 25 of the tamper-evident ring 24 opposite to the breakable line 5. When the cap 1 is applied to the neck of the container to be closed, the tabs 18, in their folded configuration, are positioned below an annular bead which projects radially outwards from an outer surface of the neck. In particular, the long side 20 of each folded tab 18 is directed towards the annular bead of the neck.

When the consumer removes the closure body 6 from the container for the first time, the folded tabs 18 abut against the annular bead of the neck, which prevents the tamper-evident ring 24 from being pulled off the neck of the container. The breakable bridges 10 are thereby stretched and break, in such a way that the closure body 6 can be brought into an open configuration. In contrast, the tamper-evident ring 24 remains joined to the neck of the container. Broken breakable bridges 10 indicate to the consumer that the container has already been opened.

The resulting cap 1 is easy to make, since the folded tabs 18 can be obtained by means of simple cutting and folding operations, without requiring complicated moulds and without creating zones with increased thickness on the cap 1, in which it could be difficult to obtain a homogeneous distribution of the material containing cellulose.

When the tabs 18 are folded inwards towards the inside of the cup-shaped component 2, there may be interference between the short sides 27 of two adjacent folded tabs 18, as shown in the detail in Figure 4. That is to say, one folded tab 18 may be slightly superposed on the adjacent folded tabs 18, or may interfere with the adjacent folded tabs 18. The detail in Figure 4 shows how the folded tab 18 arranged in the central position interferes with the folded tabs 18 which are in the peripheral positions and remains slightly further from the inner surface of the cup-shaped component 2 than the folded tabs 18 which are in the peripheral positions.

The superposing or interference between adjacent folded tabs 18 does not cause particular disadvantages, and on the contrary may help in some cases because it helps to reduce the internal diameter of the tamper-evident ring 24. Consequently, the tamper-evident ring 24 is more tightly fitted on the neck of the container and unwanted movements of the tamper-evident ring 24, for example rotations, are made more difficult.

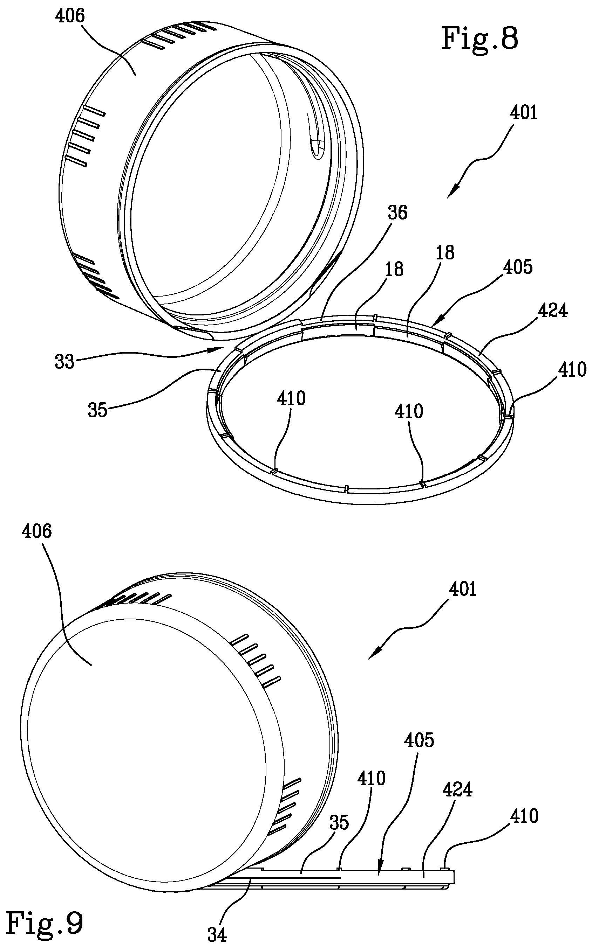

The solution shown in Figure 8 is particularly easy to make, since a common cut line 17 separates two adjacent tabs 18. This allows the number of cut lines 17 to be minimised.

The cut lines 17 are optionally provided in an angular position which, along a line parallel to the axis Z, is inside a cut 16 of the breakable line 5. In other words, the cut lines 17 are not aligned with the breakable bridges 10. That makes it easier to stress the breakable bridges 10 when the closure body 6 is removed from the container for the first time.

In an alternative embodiment not illustrated, the cut lines 17, or some cut lines 17, may be aligned with the breakable bridges 10.

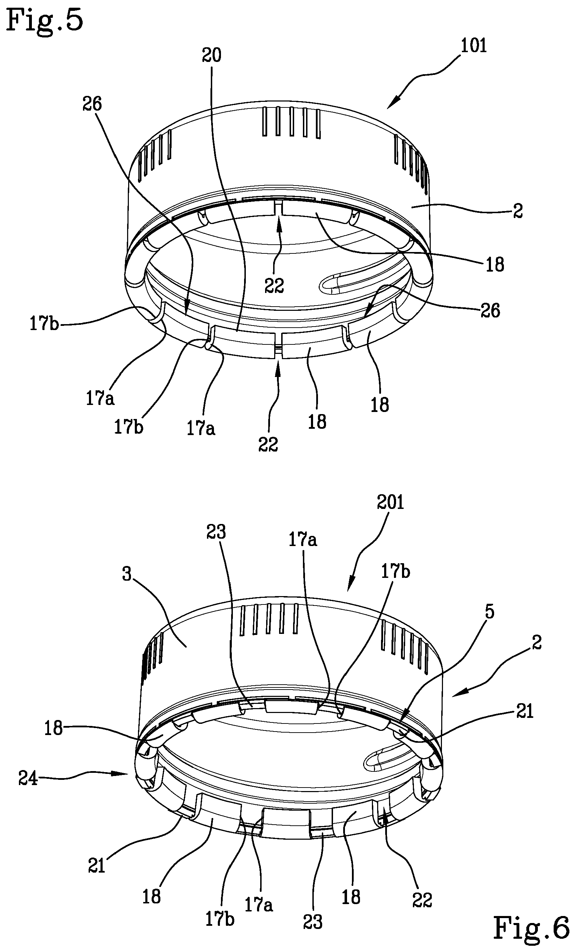

Figure 5 shows a cap 101 which differs from the cap 1 shown in Figure 4 because two adjacent tabs 18 are at a distance from each other along a circumferential line. For that purpose, two adjacent tabs 18 are defined by separate cut lines, rather than being defined by a common cut line 17 as was the case in the example of Figure 4.

In this case, the cut lines 17 comprise a plurality of pairs of cut lines, each pair including a first cut line 17a and a second cut line 17b.

A tab 18 is defined between two cut lines 17a, 17b of a pair. Each tab 18 has a long side 20 delimited by the free edge 9 and two short sides defined by two consecutive cut lines 17, which in the example illustrated are the first cut line 17a and the second cut line 17b belonging to the same pair of cut lines.

The angular distance, measured around the axis Z, between two cut lines 17a, 17b which define the short sides of the same tab 18, is generally greater than or equal to 10°. This distance defines the angular amplitude of the tab 18 around the axis Z, which may be constant for all of the tabs 18 or vary between one tab 18 and another (or between one group of tabs 18 and another).

The angular distance between two cut lines 17b, 17a belonging to different pairs, that is to say, defining the short sides of two tabs 18 near each other, may be between 1° and 5°. This angular distance defines a space 22 between two consecutive tabs 18. This angular distance too may be constant around the axis Z, or may vary around the axis Z.

Since the tabs 18 are separated by the space 22, it is possible to avoid superposing adjacent tabs 18 when the tabs 18 are folded inwards towards the inside of the annular band 7 to form the retaining elements 26.

The cap 101 is made in a similar way to the cap 1 previously described, starting from the same material. In addition to making the cut lines 17, in this case there is a step of removing excess material present between the cut lines 17b, 17a which delimit two adjacent tabs 18, so as to create the spaces 22.

Figure 6 shows a cap 201 according to an alternative embodiment, in which the tamper-evident ring 24 comprises a plurality of tabs 18 folded inwards towards the inside of the cup-shaped component 2, and in which two consecutive tabs 18 are definite by distinct cut lines 17b, 17a. Therefore, a space 22 is defined between two consecutive folded tabs 18, inside the cap 201. However, between two consecutive tabs 18, the material which forms the cup-shaped component 2 has not been completely removed. Between two consecutive tabs 18 there is an intermediate element 23 which extends only over part of the height of the tabs 18 (that is to say, over part of the dimension of the tabs 18 along a line parallel to the axis Z).

The cap 201 is made with a method similar to that used to make the caps previously described. In addition to making the cut lines 17a, 17b, transversal cuts 21 are also made on the cap 201. The transversal cuts 21 extend along a direction which is transversal, in particular perpendicular, to the axis Z and join two cut lines 17b, 17a interposed between two adjacent tabs 18. That is to say, the transversal cuts 21 may be parallel to the breakable line 5.

The transversal cuts 21 are made at a distance from the free edge 9 of the annular band 7 which is less than the length of the cut lines 17a, 17b.

In this way between two adjacent tabs 18 the intermediate element 23 is defined, as a continuation of the skirt 3 interposed between two adjacent tabs 18. Each intermediate element 23 has the structure of a portion of a cylinder which extends around the axis Z with a predetermined angular amplitude.

The intermediate element 23 has a dual function. It acts as a reinforcing contact element to prevent, or to limit, lateral deformations of the tabs 18, above all after they have been folded. It also acts as a protective element to prevent dust or dirt from entering the container closed by the cap 201. In the absence of the intermediate elements 23, given the considerable dimensions of the spaces 22, the substance contained in the container closed by the cap 201 could be contaminated in an unwanted way by particles or foreign bodies which, from the outside, could enter the container through the spaces 22.

The transversal cut 21 joins two cut lines 17b, 17a interposed between two consecutive tabs 18 and allows the detaching, from the cup-shaped component 2, of a piece of material interposed between two cut lines 17b, 17a and the transversal cut 21. That piece of material may thereby be moved away from the cap.

Owing to the spaces 22, it is possible to avoid superposing the folded tabs 18 inside the cap 201.

The transversal cuts 21 may be made simultaneously with the cut lines 17a, 17b, for example by means of a cutting blade or by means of laser cutting. The position of the transversal cuts 21, in particular their distance from the breakable line 5, may be different from that shown in Figure 6, so that the axial dimension of the intermediate elements 23 may change compared with that illustrated.

In all of the embodiments of the cap described up to now, the tabs 18 may have an intended folding line arranged in a position along which the tabs 18 are designed to be folded inwards towards the inside of the cup-shaped component 2.

The intended folding line may be a line along which the thickness of the annular band 7 is reduced compared with the surrounding zones. In this way the tabs 18 are easier to fold.

The intended folding line may be a cut made on the annular band 7 after the cap has already been formed, for example after having extracted the cap from the mould or while the cap is still in the mould. Alternatively, the intended folding line may be made during moulding of the cap in the mould. It is possible to select the desired number of cut lines 17, 17a, 17b, so as to be able to obtain a desired number of tabs 18. It is also possible to select only two cut lines, so as to obtain a cap having only two tabs 18, or three cut lines, in which case the cap would comprise three folded tabs 18.

In an alternative embodiment not illustrated, the cut lines 17, 17a, 17b may be absent. In this case, the cap comprises a single tab, that is to say, a single portion of the annular band, which may be circumferentially continuous, which is folded inwards towards the inside of the cup-shaped component to prevent tamper-evident ring from being pulled off the neck of the container.

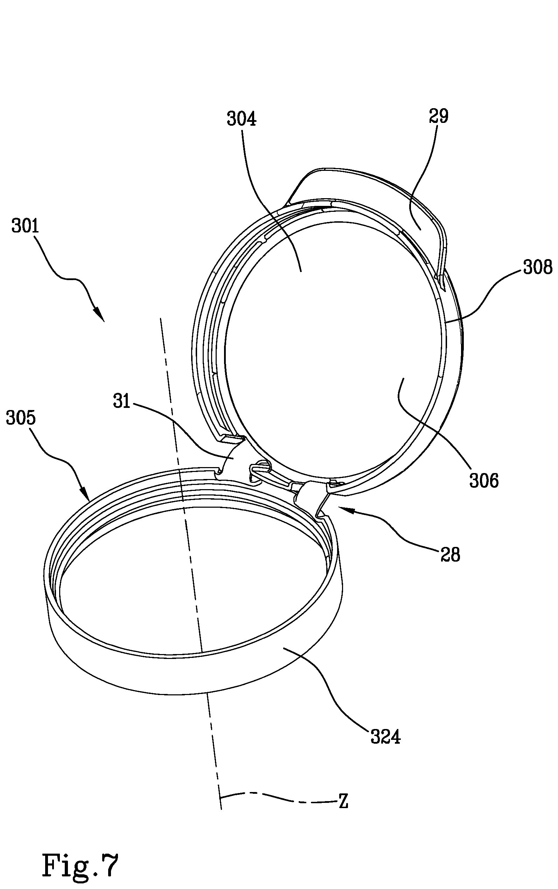

Figure 7 shows a cap 301 according to an alternative embodiment.

The cap 301 is made with a material containing cellulose, having the same features as already described with reference to the preceding caps, and using the same compression moulding technology.

The cap 301 comprises a tamper-evident ring 324 intended to remain joined to a neck of a container. The tamper-evident ring 324 may be of the type described with reference to Figures 1 to 6, that is to say, provided with tabs 18 separated by cut lines 17 and folded inwards. Alternatively, the tamper-evident ring 324 may comprise one or more retaining elements of a type different from the folded tabs 18, which are suitable for preventing the tamper-evident ring 324 from being pulled off the neck of the container. The cap 301 also comprises a closure body 306, movable between a closed position not illustrated and an open position shown in Figure 7, for closing or alternatively opening an opening defined by the neck of the container. The closure body 306 is hinged to the tamper-evident ring 324, that is to say, is fixed to the tamper-evident ring 324 by means of a hinge structure 28.

Therefore, the closure body 306 is movable between the open position and the closed position substantially by means of a rotating movement, around a hinge axis which may be perpendicular to the axis Z.

The closure body 306 comprises an end wall 304, which may be substantially flat. The end wall 304 extends transversally, in particular perpendicularly, to the axis Z.

The closure body 306 also has a lateral wall 308, which extends around the axis Z and is closed at one end by the end wall 304.

A protrusion 29 may project from the lateral wall 308, in a position diametrically opposed to the hinge structure 28, so as to facilitate opening of the container closed by the cap 301. In fact, when a user wants to bring the closure body 306 into the open position, he/she can put one finger below the protrusion 29, so as to more easily make the closing element 306 rotate around the hinge axis.

The closure body 306 may comprise an inner fixing structure to allow the closure body 306 to be removably fixed to the neck of the container.

In the example illustrated, the inner fixing structure is configured to allow the closure body 306 to engage snap-on style with the neck of the container.

For that purpose, the inner fixing structure may comprise one or more projections which project inwards towards the inside of the closure body 306 to engage with corresponding projections made on the neck.

Before the cap 301 is opened for the first time, a breakable line 305 is defined between the closure body 306 and the tamper-evident ring 324. The closure body 306 is initially joined to the tamper-evident ring 324 along the breakable line 305.

The breakable line 305 may extend in a plane arranged transversally, in particular perpendicularly, to the axis Z.

The breakable line 305 has a circumferential extent around the axis Z which is less than 360°, because the closure body 306 is joined to the tamper-evident ring 324 at least along the hinge structure 28.

Along the breakable line 305 a plurality of breakable bridges not illustrated may be provided, suitable for being broken the first time the closure body 306 is brought into the open position, thereby signalling to the user if the container closed by the cap 301 has ever been opened.

In Figure 7, the breakable line 305 is shown as a separating line between the closure body 306 and the tamper-evident ring 324, after the closure body 306 has already been brought into the open position.

The hinge structure 28 comprises at least one connecting band 31, arranged to connect the tamper-evident ring 324 to the closure body 306. The connecting band 31 allows the closure body 306 to be kept joined to the tamper-evident ring 324 even when the closure body 306 is in the open position.

In the example illustrated, there are two connecting bands 31.

The mechanical properties of the material containing cellulose with which the cap 301 is made, and in particular the elastic modulus of between 200 and 2000 MPa, the tensile strength of between 15 and 70 MPa, and the deformation at the maximum tensile stress of between 3% and 30%, allow the hinge structure 28 to be repeatedly bent to open or close the container closed by the cap 301 without it being damaged.

Figures 8 and 9 show a cap 401 according to an alternative embodiment. The cap 401 comprises a closure body 406 similar to the closure body 6 of the caps shown in Figures 1 to 6. The closure body 406 will not be described in detail again, since what was previously set out with reference to Figures 1 to 6 is applicable to it.

The cap 401 also comprises a tamper-evident ring 424 which comprises a plurality of retaining elements to keep the tamper-evident ring 424 joined to the neck of the container even after the latter has been opened by removing the closure body 406. The retaining elements may comprise respective folded tabs 18 according to what was described with reference to Figures 1 to 6.

In the example shown in Figure 8, the folded tabs 18 are similar to those shown in Figure 4, in which the folded tabs 18 are slightly superposed on each other. However, it is also possible to use folded tabs 18 of the type shown in Figures 5 or 6, or retaining elements having a structure different from the folded tabs.

A breakable line 405 is provided, which is similar to the breakable line 5 shown in Figures 1 to 6, and joins the tamper-evident ring 424 and the closure body 406 before the first opening. In Figures 8 and 9, the closure body 406 has already been separated from the tamper-evident ring 424 along the breakable line 405 by breaking the breakable bridges 410, which are visible since they project from the breakable line 405.

The breakable line 405 extends less than 360° around the axis Z, so that, after the closure body 406 has been separated from the tamper-evident ring 424 along the breakable line 405, a joining portion 33 at which the closure body 406 is joined to the tamper-evident ring 424 remains intact. The joining portion 33 allows the closure body 406 to be kept joined to the tamper-evident ring 424, and therefore anchored to the neck of the container, even after the first opening.

An interrupting line 34 is made on the tamper-evident ring 424, which interrupts the continuity of the material of the tamper-evident ring 424.

The interrupting line 34 may be parallel to the breakable line 405. The interrupting line 34 may be made by means of a cutting operation performed on the tamper-evident ring 424.

Along the interrupting line 34 a plurality of breakable bridges not illustrated may be provided, intended to break the first time the closure body 406 is brought into the open position.

The interrupting line 34 is axially aligned with the joining portion 33 and is arranged in a position centred relative to the joining portion 33. The interrupting line 34 has an angular dimension, around an axis of the cap 401, which is greater than the angular dimension of the joining portion 33. In this way, between the interrupting line 34 and the breakable line 405 two connecting bands 35, 36 are defined which join the tamper-evident ring 424 to the closure body 406.

More specifically, the connecting bands 35, 36 join the tamper-evident ring 424 to the joining portion 33.

The connecting bands 35, 36 and the joining portion 33 define a hinge structure which allows the closure body 406 to be rotated relative to the tamper-evident ring 424 for moving between an open position and a closed position.

Owing to the connecting bands 35, 36 the closure body 406 remains joined to the tamper-evident ring 424, and therefore anchored to the neck of the container, even in the open position, which prevents the possibility of the closure body 406 being accidentally discarded in the environment separately from the container to which the cap 401 was applied.

When the closure body 406 is brought into the open position, the connecting bands 35, 36 move away from the tamper-evident ring 424 along the interrupting line 34, which allows the closure body 406 to be disengaged from the neck of the container, for example by unscrewing the closure body 406 from the neck.

The cap 401 may be made with the same material containing cellulose, more specifically having a cellulose matrix, previously described with reference to the cap 1. The mechanical properties of this material, and in particular the elastic modulus of between 20 and 2000 MPa, the tensile strength of between 15 and 70 MPa, and the deformation at the maximum tensile stress of between 3% and 30%, allow the hinge structure comprising the connecting bands 35, 36 and the joining portion 33 to be deformed to bring the closure body 306 selectively into the closed position or into the open position without the cap 301 being damaged.

In all of the embodiments of the cap previously described, the closure body may be provided with one or more sealing members arranged to allow the closure body to engage in a sealed way with the neck of the container. For example, on an inner face of the end wall there may be one or more annular sealing lips which project inwards towards the inside of the closure body to engage with an inner surface, and/or with an outer surface, and/or with a front surface of the neck of the container on which the cap is applied. The annular sealing lip or the annular sealing lips are made at the moment when the cap is made, in the same mould in which the cap itself if formed. Alternatively, on an inner face of the end wall a gasket may be applied, shaped like an annular element or like a solid disk, for example circular, suitable for engaging with an edge zone of the neck of the container for sealingly closing the container. The gasket may be made with a natural fibre-based material, in particular with a material containing cellulose, in such a way as to obtain a cap entirely made with an eco-friendly material. In this case, the result is a cap having a particularly low environmental impact.

In all the embodiments disclosed up to now, the annular band may have a substantially constant thickness. In this case, the retaining element or the retaining elements, produced by folding at least a portion of the annular band towards the inside of the cup-shaped component, has or have a substantially constant thickness.

This makes easier to produce the cap, because the cap can be produced in relatively simple moulds. Furthermore, there is no need to provide beads, protrusions, thin sections or other thickness variations on the annular band. These thickness variations might be difficult to be obtained with a cellulose-based material.

## Claims

1. A method for making a cap (1; 101; 201; 301; 401) for a container, comprising the steps of:
- inserting in a mould a material in a solid state or in the form of a solid dispersed in a liquid, said material containing at least 70% cellulose by weight;
- pressing the material in the mould, to obtain a cup-shaped component (2), the cup-shaped component (2) having a skirt (3) which extends around an axis (Z) and an end wall (4; 304) which closes the skirt (3) at one end thereof;
- making on the skirt (3) at least one breakable line (5; 305; 405) which at least partly surrounds the axis (Z) to define on the cup-shaped component (2) a closure body (6; 306; 406) and an annular band (7);
- folding a portion (18) of the annular band (7) inwards towards the inside of the cup-shaped component (2), to obtain at least one retaining element (26) which projects inwards towards the inside of the annular band (7) so as to keep the annular band (7) associated with a neck of the container.

2. The method according to claim 1, and further comprising the step of making a plurality of cut lines (17, 17a, 17b) which extend transversally to a free edge (9) of the skirt (3) in an end region of the skirt (3) opposite to the end wall (4; 304), and wherein the portion of the annular band (7) which is folded inwards towards the inside of the cup-shaped component (2) to obtain the retaining element (26) is a tab (18) defined between two consecutive cut lines (17, 17a, 17b).

3. The method according to claim 2, wherein two adjacent tabs (18) are separated by a common cut line (17) which defines on two adjacent tabs (18) respective sides (27), and wherein said sides (27) are at least partly superposed or interfering with each other, after the tabs (18) have been folded inwards towards the inside of the cup-shaped component (2).

4. The method according to claim 2, wherein two adjacent tabs (18) are separated by two consecutive distinct cut lines (17a, 17b), so that when two adjacent tabs (18) are folded inwards towards the inside of the cup-shaped component (2), a space (22) remains defined between the two adjacent tabs (18).

5. The method according to claim 4, and further comprising the step of removing a piece of material of the skirt (3) interposed between two consecutive distinct cut lines (17a, 17b), the piece of material of the skirt (3) being removed by making a transversal cut (21) between the two consecutive distinct cut lines (17a, 17b), and optionally wherein the transversal cut (21) joins respective inner points of the two consecutive distinct cut lines (17a, 17b), so as to leave an intermediate element (23) which extends as a continuation of the skirt (3) between two adjacent folded tabs (18).

6. The method according to any preceding claim, and further comprising the step of forming an intended folding line in a position along which the portion (18) of the annular band is intended to be folded, so as to facilitate folding of the portion (18) of the annular band inwards towards the inside of the cup-shaped component (2).

7. The method according to any preceding claim, wherein the material in the solid state is inserted in the mould in a form selected from: powder, granules, solid film, fluff, airlaid structure; or
wherein the material in the form of a solid dispersed in a liquid is in the pasty state when it is inserted in the mould.

8. A cap according to any preceding claim, wherein said at least one retaining element (26) has a substantially constant thickness.

9. A cap for a container, the cap comprising a cup-shaped component (2) made with a material comprising a cellulose matrix, wherein at least 70% by weight of the material with which the cap is made is cellulose, the cup-shaped component (2) having a skirt (3) which extends around an axis (Z) and an end wall (4; 304) which closes the skirt (3) at one end thereof, wherein at least one breakable line (5; 305; 405) is provided on the skirt (3), the least one breakable line (5; 305; 405) at least partly surrounding the axis (Z) to define on the cup-shaped component (2) a closure body (6; 306; 406) and a tamper-evident ring (24; 324; 424), and wherein the tamper-evident ring (24; 324; 424) comprises an annular band (7) having a portion (18) folded inwards towards the inside of the cup-shaped body (2), so as to define a retaining element (26) which projects inwards towards the inside of the tamper-evident ring (24; 324; 424) to keep the tamper-evident ring (24; 324; 424) associated with a neck of the container.

10. The cap according to claim 9, wherein the annular band (7) comprises a plurality of retaining elements (26) defined by respective tabs (18) folded inwards towards the inside of the cup-shaped component (2), each tab (18) extending from an end zone of the tamper-evident ring (24; 324; 424) opposite to the breakable line (5; 305; 405).

11. The cap according to claim 10, wherein two adjacent tabs (18) folded inwards towards the inside of the cup-shaped component (2) are in contact with each other inside the cup-shaped component (2), or
wherein two adjacent tabs (18) folded inwards towards the inside of the cup-shaped component (2) have respective sides (27) which are at least partly superposed, or
wherein two adjacent tabs (18) folded inwards towards the inside of the cup-shaped component (2) are at a distance from each other.

12. A cap for a container, comprising a closure body (306; 406) having an inner fixing structure for being removably fixed to a neck of the container, a tamper-evident ring (324; 424) intended to remain anchored to the neck of the container, at least one connecting band (31; 35, 36) for keeping the closure body (306; 406) anchored to the tamper-evident ring (324; 424) even after the closure body (306; 406) has been removed from the neck, wherein the cap (301; 401) is made with a material containing at least 70% cellulose by weight, said material having an elastic modulus of between 200 and 2000 MPa, a tensile strength of between 15 and 70 MPa, and a deformation at the maximum tensile stress of between 3% and 30%.

13. The cap according to claim 12, wherein the inner fixing structure is configured in such a way as to allow the closure body (306) to engage snap-on style with the neck of the container, or
wherein the inner fixing structure comprises at least one helical thread for allowing the closure body (406) to be screwed onto the neck of the container.

14. The cap according to claim 12 or 13, wherein the tamper-evident ring (424) has an interrupting segment (32) which interrupts continuity of the tamper-evident ring (424) and is arranged parallel to the breakable line (405) so that two connecting bands (35, 36) are defined between the breakable line (405) and the interrupting segment (32).

15. The cap according to any one of claims 9 to 14, wherein the material containing at least 70% cellulose by weight with which the cap is made has a density of between 0.75 and 1.3 g/cm³, or
wherein the material with which the cap is made comprises cellulose fibres at least 50% of which have a length of between 0.2 and 3.0 mm, and a transversal dimension of between 0.01 and 0.05 mm.

## Patentansprüche

1. Verfahren zur Herstellung eines Deckels (1; 101; 201; 301; 401) für einen Behälter, folgende Schritte umfassend:
- Einbringen eines Materials in festem Zustand oder in Form eines in einer Flüssigkeit dispergierten Feststoffs in ein Formwerkzeug, wobei das Material mindestens 70 Gew.-% Cellulose enthält;
- Pressen des Materials in dem Formwerkzeug, um eine becherförmige Komponente (2) zu erhalten, wobei die becherförmige Komponente (2) eine Schürze (3) aufweist, die sich um eine Achse (Z) erstreckt, und eine Abschlusswand (4; 304) aufweist, welche die Schürze (3) an einem Ende derselben verschließt;
- Erzeugen von zumindest einer Sollbruchlinie (5; 305; 405) auf der Schürze (3), die zumindest teilweise die Achse (Z) umgibt, um an der becherförmigen Komponente (2) einen Verschlusskörper (6; 306; 406) und ein ringförmiges Band (7) zu definieren;
- Umbiegen eines Abschnitts (18) des ringförmigen Bandes (7) nach innen in Richtung des Inneren der becherförmigen Komponente (2), um zumindest ein Rückhalteelement (26) zu erhalten, das nach innen in Richtung des Inneren des ringförmigen Bandes (7) hervorsteht, um das ringförmige Band (7) mit einem Hals des Behälters verbunden zu halten.

2. Verfahren nach Anspruch 1, ferner umfassend den Schritt des Herstellens einer Vielzahl von Schnittlinien (17, 17a, 17b), die sich in Querrichtung zu einer freien Kante (9) der Schürze (3) in einem Endbereich der Schürze (3) gegenüber der Abschlusswand (4; 304) erstrecken, und wobei der Abschnitt des ringförmigen Bandes (7), der nach innen in Richtung des Inneren der becherförmigen Komponente (2) umgebogen ist, um das Rückhalteelement (26) zu erhalten, eine Lasche (18) ist, die zwischen zwei aufeinanderfolgenden Schnittlinien (17, 17a, 17b) definiert ist.

3. Verfahren nach Anspruch 2, wobei zwei aneinander angrenzende Laschen (18) durch eine gemeinsame Schnittlinie (17) voneinander getrennt sind, die an zwei aneinander angrenzenden Laschen (18) jeweilige Seiten (27) definiert, und wobei die Seiten (27) zumindest teilweise übereinander liegen oder sich gegenseitig überlagern, nachdem die Laschen (18) nach innen in Richtung des Inneren der becherförmigen Komponente (2) umgebogen wurden.

4. Verfahren nach Anspruch 2, wobei zwei aneinander angrenzende Laschen (18) durch zwei aufeinanderfolgende unterschiedliche Schnittlinien (17a, 17b) voneinander getrennt sind, so dass, wenn zwei aneinander angrenzende Laschen (18) nach innen in Richtung des Inneren der becherförmigen Komponente (2) umgebogen werden, zwischen den beiden aneinander angrenzenden Laschen (18) ein Zwischenraum (22) definiert bleibt.

5. Verfahren nach Anspruch 4, und ferner umfassend den Schritt des Entfernens eines Teils des Materials der Schürze (3), das zwischen zwei aufeinanderfolgenden unterschiedlichen Schnittlinien (17a, 17b) angeordnet ist, wobei das Teil des Materials der Schürze (3) durch Ausführen eines quer verlaufenden Schnitts (21) zwischen den zwei aufeinanderfolgenden unterschiedlichen Schnittlinien (17a, 17b) entfernt wird, und wobei optional der quer verlaufende Schnitt (21) jeweilige innere Punkte der zwei aufeinanderfolgenden unterschiedlichen Schnittlinien (17a, 17b) miteinander verbindet, so dass ein Zwischenelement (23) verbleibt, das sich als Fortsetzung der Schürze (3) zwischen zwei aneinander angrenzenden umgebogenen Laschen (18) erstreckt.

6. Verfahren nach einem beliebigen der vorhergehenden Ansprüche, und ferner umfassend den Schritt des Bildens einer Sollbiegelinie in einer Position, entlang welcher der Abschnitt (18) des ringförmigen Bandes umgebogen werden soll, um das Umbiegen des Abschnitts (18) des ringförmigen Bandes nach innen in Richtung des Inneren der becherförmigen Komponente (2) zu erleichtern.

7. Verfahren nach einem beliebigen der vorhergehenden Ansprüche, wobei das Material im festen Zustand in einer Form in das Formwerkzeug eingebracht wird, die ausgewählt ist aus: Pulver, Granulat, festem Film, Flocken, luftgelegter Struktur ("Airlaid"); oder
wobei das Material in Form eines in einer Flüssigkeit dispergierten Feststoffs beim Einbringen in das Formwerkzeug in pastösem Zustand vorliegt.

8. Deckel nach einem beliebigen der vorhergehenden Ansprüche, wobei das zumindest eine Rückhalteelement (26) eine im Wesentlichen konstante Dicke aufweist.

9. Deckel für einen Behälter, wobei der Deckel eine becherförmige Komponente (2) umfasst, die aus einem Material hergestellt ist, das eine Cellulosematrix umfasst, wobei mindestens 70 Gew.-% des Materials, aus dem der Deckel hergestellt ist, Cellulose sind, wobei die becherförmige Komponente (2) eine Schürze (3) aufweist, die sich um eine Achse (Z) erstreckt, und eine Abschlusswand (4; 304) aufweist, welche die Schürze (3) an einem Ende derselben verschließt, wobei mindestens eine Sollbruchlinie (5; 305; 405) an der Schürze (3) vorgesehen ist, wobei die mindestens eine Sollbruchlinie (5; 305; 405) zumindest teilweise die Achse (Z) umgibt, um an der becherförmigen Komponente (2) einen Verschlusskörper (6; 306; 406) und einen Originalitätsring (24; 324; 424) zu definieren, und wobei der Originalitätsring (24; 324; 424) ein ringförmiges Band (7) umfasst, das einen Abschnitt (18) aufweist, der nach innen in Richtung des Inneren des becherförmigen Körpers (2) umgebogen ist, um ein Rückhalteelement (26) zu definieren, das nach innen in Richtung des Inneren des Originalitätsrings (24; 324; 424) hineinragt, um den Originalitätsring (24; 324; 424) mit einem Hals des Behälters verbunden zu halten.

10. Deckel nach Anspruch 9, wobei das ringförmige Band (7) eine Vielzahl von Rückhalteelementen (26) umfasst, die durch entsprechende Laschen (18) definiert sind, die nach innen in Richtung des Inneren der becherförmigen Komponente (2) umgebogen sind, wobei sich jede Lasche (18) von einem Endbereich des Originalitätsrings (24; 324; 424) entgegengesetzt zu der Sollbruchlinie (5; 305; 405) erstreckt.

11. Deckel nach Anspruch 10, wobei zwei aneinander angrenzende Laschen (18), die nach innen in Richtung des Inneren der becherförmigen Komponente (2) umgebogen sind, innerhalb der becherförmigen Komponente (2) miteinander in Kontakt stehen, oder
wobei zwei aneinander angrenzende Laschen (18), die nach innen in Richtung des Inneren der becherförmigen Komponente (2) umgebogen sind, jeweilige Seiten (27) aufweisen, die zumindest teilweise einander überlagern, oder
wobei zwei aneinander angrenzende Laschen (18), die nach innen in Richtung des Inneren der becherförmigen Komponente (2) umgebogen sind, in einem Abstand voneinander angeordnet sind.

12. Deckel für einen Behälter, umfassend einen Verschlusskörper (306; 406), der eine innere Befestigungsstruktur aufweist, um abnehmbar an einem Hals des Behälters befestigt zu werden, einen Originalitätsring (324; 424), der dazu bestimmt ist, am Hals des Behälters verankert zu bleiben, zumindest ein Verbindungsband (31; 35, 36), um den Verschlusskörper (306; 406) an dem Originalitätsring (324; 424) verankert zu halten, selbst nachdem der Verschlusskörper (306; 406) von dem Hals entfernt wurde, wobei der Deckel (301; 401) aus einem Material hergestellt ist, das mindestens 70 Gew.-% Cellulose enthält, wobei das Material ein Elastizitätsmodul zwischen 200 und 2000 MPa, eine Zugfestigkeit zwischen 15 und 70 MPa und eine Verformung bei maximaler Zugspannung zwischen 3 % und 30 % aufweist.

13. Deckel nach Anspruch 12, wobei die innere Befestigungsstruktur derart gestaltet ist, dass der Verschlusskörper (306) einrastend mit dem Hals des Behälters in Eingriff gelangen kann, oder
wobei die innere Befestigungsstruktur zumindest ein spiralförmiges Gewinde umfasst, damit der Verschlusskörper (406) auf den Hals des Behälters aufgeschraubt werden kann.

14. Deckel nach Anspruch 12 oder 13, wobei der Originalitätsring (424) ein Unterbrechungssegment (32) aufweist, das die Kontinuität des Originalitätsrings (424) unterbricht und parallel zu der Sollbruchlinie (405) angeordnet ist, so dass zwei Verbindungsbänder (35, 36) zwischen der Sollbruchlinie (405) und dem Unterbrechungssegment (32) definiert werden.

15. Deckel nach einem der Ansprüche 9 bis 14, wobei das Material, das mindestens 70 Gew.-% Cellulose enthält, aus dem der Deckel hergestellt ist, eine Dichte zwischen 0,75 und 1,3 g/cm³ aufweist, oder
wobei das Material, aus dem der Deckel hergestellt ist, Cellulosefasern umfasst, von denen mindestens 50 % eine Länge zwischen 0,2 und 3,0 mm und eine Querabmessung zwischen 0,01 und 0,05 mm aufweisen.

## Revendications

1. Une méthode de fabrication d'un bouchon (1 ; 101 ; 201 ; 301 ; 401) pour un récipient, comprenant les étapes consistant à :
- introduire dans un moule un matériau à l'état solide ou sous la forme d'un solide dispersé dans un liquide, ledit matériau contenant au moins 70 % de cellulose en poids ;
- presser le matériau dans le moule, pour obtenir un composant en forme de coupe (2), le composant en forme de coupe (2) ayant une jupe (3) qui s'étend autour d'un axe (Z) et une paroi d'extrémité (4 ; 304) qui ferme la jupe (3) à une extrémité de celle-ci ;
- réaliser sur la jupe (3) au moins une ligne rupturable (5 ; 305 ; 405) qui entoure au moins en partie l'axe (Z) pour définir sur le composant en forme de coupe (2) un corps de fermeture (6 ; 306 ; 406) et une bande annulaire (7) ;
- replier une portion (18) de la bande annulaire (7) intérieurement vers l'intérieur du composant en forme de coupe (2), pour obtenir au moins un élément de retenue (26) qui se projette intérieurement vers l'intérieur de la bande annulaire (7) de manière à maintenir la bande annulaire (7) associée avec un col du récipient.

2. La méthode selon la revendication 1, et comprenant en outre l'étape consistant à réaliser une pluralité de lignes de coupe (17, 17a, 17b) qui s'étendent transversalement à un bord libre (9) de la jupe (3) dans une région d'extrémité de la jupe (3) opposée à la paroi d'extrémité (4 ; 304), et dans laquelle la portion de la bande annulaire (7) qui est repliée intérieurement vers l'intérieur du composant en forme de coupe (2), pour obtenir l'élément de retenue (26), est une languette (18) définie entre deux lignes de coupe (17, 17a, 17b) consécutives.

3. La méthode selon la revendication 2, dans laquelle deux languettes (18) adjacentes sont séparées par une ligne de coupe (17) commune qui définit sur deux languettes (18) adjacentes des côtés (27) respectifs, et dans laquelle lesdits côtés (27) sont au moins partiellement superposés ou interfèrent l'un avec l'autre, une fois que les languettes (18) ont été repliées intérieurement vers l'intérieur du composant en forme de coupe (2).

4. La méthode selon la revendication 2, dans laquelle deux languettes (18) adjacentes sont séparées par deux lignes de coupe (17a, 17b) distinctes et consécutives de manière à ce que, lorsque deux languettes (18) adjacentes sont repliées intérieurement vers l'intérieur du composant en forme de coupe (2), un espace (22) reste défini entre les deux languettes (18) adjacentes.

5. La méthode selon la revendication 4, et comprenant en outre l'étape consistant à enlever un morceau de matériau de la jupe (3) interposé entre deux lignes de coupe (17a, 17b) distinctes et consécutives, le morceau de matériau de la jupe (3) étant enlevé en réalisant une coupe transversale (21) entre les deux lignes de coupe (17a, 17b) distinctes et consécutives, et optionnellement dans laquelle la coupe transversale (21) unit des points intérieurs respectifs des deux lignes de coupe (17a, 17b) distinctes et consécutives, de manière à laisser un élément intermédiaire (23) qui s'étend comme une continuation de la jupe (3) entre deux languettes (18) repliées adjacentes.

6. La méthode selon l'une quelconque des revendications précédentes, et comprenant en outre l'étape consistant à former une ligne de pliage prévu dans une position le long de laquelle la portion (18) de la bande annulaire est destinée à être repliée, de manière à faciliter le pliage de la portion (18) de la bande annulaire intérieurement vers l'intérieur du composant en forme de coupe (2).

7. La méthode selon l'une quelconque des revendications précédentes, dans laquelle le matériau à l'état solide est introduit dans le moule dans une forme choisie parmi : poudre, granulés, film solide, ouate, structure airlaid ; ou
dans laquelle le matériau sous la forme d'un solide dispersé dans un liquide est à l'état pâteux lorsqu'il est introduit dans le moule.

8. Un bouchon selon l'une quelconque des revendications précédentes, dans lequel ledit au moins un élément de retenue (26) a une épaisseur essentiellement constante.

9. Un bouchon pour un récipient, le bouchon comprenant un composant en forme de coupe (2) réalisé avec un matériau comprenant une matrice de cellulose, dans lequel au moins 70 % en poids du matériau avec lequel le bouchon est réalisé sont de la cellulose, le composant en forme de coupe (2) ayant une jupe (3) qui s'étend autour d'un axe (Z) et une paroi d'extrémité (4 ; 304) qui ferme la jupe (3) à une extrémité de celle-ci, dans lequel au moins une ligne rupturable (5 ; 305 ; 405) est prévue sur la jupe (3), ladite au moins une ligne rupturable (5 ; 305 ; 405) entourant au moins en partie l'axe (Z) pour définir sur le composant en forme de coupe (2) un corps de fermeture (6 ; 306 ; 406) et une bague d'inviolabilité (24 ; 324 ; 424), et dans lequel la bague d'inviolabilité (24 ; 324 ; 424) comprend une bande annulaire (7) ayant une portion (18) repliée intérieurement vers l'intérieur du corps en forme de coupe (2), de manière à définir un élément de retenue (26) qui se projette intérieurement vers l'intérieur de la bague d'inviolabilité (24 ; 324 ; 424) pour maintenir la bague d'inviolabilité (24 ; 324 ; 424) associée avec un col du récipient.

10. Le bouchon selon la revendication 9, dans lequel la bande annulaire (7) comprend une pluralité d'éléments de retenue (26) définis par des languettes (18) respectives repliées intérieurement vers l'intérieur du composant en forme de coupe (2), chaque languette (18) s'étendant à partir d'une zone d'extrémité de la bague d'inviolabilité (24 ; 324 ; 424) opposée à la ligne rupturable (5 ; 305 ; 405).

11. Le bouchon selon la revendication 10, dans lequel deux languettes (18) adjacentes repliées intérieurement vers l'intérieur du composant en forme de coupe (2) sont en contact l'une avec l'autre à l'intérieur du composant en forme de coupe (2), ou
dans lequel deux languettes (18) adjacentes repliées intérieurement vers l'intérieur du composant en forme de coupe (2) ont des côtés (27) respectifs qui sont au moins partiellement superposés, ou
dans lequel deux languettes (18) adjacentes repliées intérieurement vers l'intérieur du composant en forme de coupe (2) sont espacées l'une de l'autre.

12. Un bouchon pour un récipient, comprenant un corps de fermeture (306 ; 406) ayant une structure intérieure de fixation pour pouvoir être fixé de façon amovible à un col du récipient, une bague d'inviolabilité (324 ; 424) destinée à rester ancrée au col du récipient, au moins une bande de raccordement (31 ; 35, 36) pour maintenir le corps de fermeture (306 ; 406) ancré à la bague d'inviolabilité (324 ; 424) même après que le corps de fermeture (306 ; 406) a été enlevé du col, dans lequel le bouchon (301 ; 401) est réalisé avec un matériau contenant au moins 70 % de cellulose en poids, ledit matériau ayant un module d'élasticité compris entre 200 et 2 000 MPa, une résistance à la traction comprise entre 15 et 70 MPa, et une déformation à la contrainte de traction maximale comprise entre 3 % et 30 %.

13. Le bouchon selon la revendication 12, dans lequel la structure intérieure de fixation est configurée de manière à permettre au corps de fermeture (306) de s'assujettir par pression avec le col du récipient, ou
dans lequel la structure intérieure de fixation comprend au moins un filetage hélicoïdal pour permettre au corps de fermeture (406) d'être vissé sur le col du récipient.

14. Le bouchon selon la revendication 12 ou 13, dans lequel la bague d'inviolabilité (424) a un segment d'interruption (32) qui interrompt la continuité de la bague d'inviolabilité (424) et est disposé parallèlement à la ligne rupturable (405) de sorte que deux bandes de raccordement (35, 36) sont définies entre la ligne rupturable (405) et le segment d'interruption (32).

15. Le bouchon selon l'une quelconque des revendications de 9 à 14, dans lequel le matériau contenant au moins 70 % de cellulose en poids, avec lequel le bouchon est réalisé, a une densité comprise entre 0,75 et 1,3 g/cm³, ou
dans lequel le matériau avec lequel le bouchon est réalisé comprend des fibres de cellulose dont au moins 50 % ont une longueur comprise entre 0,2 et 3,0 mm et une dimension transversale comprise entre 0,01 et 0,05 mm.
